(19) Europäisches Patentamt
European Patent Office
Office européen des brevets

(11) **EP 4 656 901 A1**

(12) **EUROPÄISCHE PATENTANMELDUNG**

(43) Veröffentlichungstag:
**03.12.2025 Patentblatt 2025/49**

(21) Anmeldenummer: **25178759.4**

(22) Anmeldetag: **26.05.2025**

(51) Internationale Patentklassifikation (IPC):
**F16F 7/10** (2006.01)

(52) Gemeinsame Patentklassifikation (CPC):
**F16F 7/1005; F16F 7/104**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **27.05.2024 DE 102024114772**

(71) Anmelder: **Jöst GmbH + Co. KG**
**48249 Dülmen (DE)**

(72) Erfinder: **Thomas Hypki**
**48249 Dülmen (DE)**

(74) Vertreter: **Von Rohr Patentanwälte Partnerschaft mbB**
**Rüttenscheider Straße 62**
**45130 Essen (DE)**

(54) **TILGER FÜR EINE SCHWINGUNGSMASCHINE UND SCHWINGUNGSMASCHINE**

(57) Die vorliegende Erfindung betrifft einen Tilger für eine Schwingungsmaschine, insbesondere für einen Schwingförderer zum Fördern von Schüttgut und/oder für eine Siebmaschine zum Sieben von Schüttgut, mit einem Kompensationssystem zur Kompensation von durch eine Schwingmasse erzeugten Schwingungskräften. Erfindungsgemäß weist das Kompensationssystem mindestens eine Feder mit veränderbarer Federhärte auf.

Fig. 4

EP 4 656 901 A1

**Beschreibung**

Die vorliegende Erfindung betrifft einen Tilger für eine Schwingungsmaschine nach dem Oberbegriff des Anspruchs 1 sowie eine Schwingungsmaschine mit einem Tilger.

Eine Schwingungsmaschine im Sinne der vorliegenden Erfindung ist eine Maschine zur Verarbeitung von Schüttgut, die nach dem Vibrationsprinzip arbeitet bzw. bei der ein Teil der Maschine in Schwingung versetzt wird, um damit das Schüttgut zu bewegen. Beispiele für eine Schwingungsmaschine sind Schwingförderer und Siebmaschinen. Schwingförderer weisen einen Fördertrog auf, der in Schwingung versetzt wird, sodass Schüttgut im Fördertrog gefördert wird. Bei Siebmaschinen wird ein Sieb in Schwingung versetzt, sodass Schüttgut gesiebt bzw. nach Korngröße sortiert wird.

Für die Funktion einer Schwingungsmaschine ist es erforderlich, dass sie elastisch auf dem Boden gelagert wird. Dies erfolgt mit Federelementen, wie z.B. Schraubenfedern oder Gummifedern. Durch die periodische Belastung der Federelemente bei Schwingungen der Schwingungsmaschine wird das Fundament ebenso belastet - es treten also sogenannte dynamische Fundamentlasten auf.

Diese dynamischen Fundamentlasten stellen eine hohe Belastung für das Fundament dar und erfordern insbesondere eine entsprechende Dimensionierung der Gebäude, in denen die Schwingungsmaschine aufgestellt ist. Oftmals pflanzen sich diese Kräfte in der Gebäudestruktur sowie der weiteren Umgebung der Schwingungsmaschine fort und verursachen Schwingungen, die sich negativ auf Menschen und Apparate auswirken können.

Im Stand der Technik ist es daher üblich, die dynamischen Fundamentlasten durch gegenphasige Bewegungen von speziellen Baugruppen der Schwingmaschinen zu reduzieren bzw. zu kompensieren. Diese Baugruppen werden als Tilger oder dynamische Schwingungsdämpfer bezeichnet.

Gängig ist die Ausführung von Schwingungsmaschinen mit integriertem Tilger. Ein integrierter Tilger ist zur Kompensation der dynamischen Fundamentlasten durch ein gegenphasig schwingendes System ausgebildet. Diese Kompensation ist starr und es kann keine Anpassung an sich ändernde Belastungen erfolgen. So ist im Falle von erhöhter Materialauflast die Kompensation gestört und wirkt nicht im gewünschten Maße.

Insbesondere wenn eine Anpassung der Drehzahl eines die Schwingungsmaschine in Schwingung versetzenden Antriebs erforderlich ist, können die aus dem Stand der Technik bekannten integrierten Tilger mit starrer Kompensation nicht optimal arbeiten bzw. die dynamischen Fundamentlasten nicht optimal kompensieren. Die Änderung der Drehzahl ist insbesondere bei als Resonanzmaschinen ausgestalteten Schwingungsmaschinen notwendig, um eine Beschädigung der Schwingungsmaschine durch große Schwingweiten zu verhindern. Solche großen Schwingweiten können zum Beispiel entstehen, wenn Fördergut an der Maschine bzw. dem Fördertrog anhaftet und durch diese Materialankopplung veränderte Schwingungsverhältnisse entstehen.

Der vorliegenden Erfindung liegt daher die Aufgabe zugrunde, eine Lösung anzugeben, die eine verbesserte Schwingungskompensation, insbesondere eine verbesserte Reduktion bzw. Kompensation der durch eine Schwingungsmaschine erzeugten dynamischen Fundamentlasten und/oder eine Anpassung der Schwingungskompensation an ein verändertes Schwingungsverhalten beim Betrieb einer Schwingungsmaschine ermöglicht.

Die der Erfindung zugrunde liegende Aufgabe wird gelöst durch einen Tilger nach Anspruch 1 oder eine Schwingungsmaschine nach Anspruch 15. Vorteilhafte Weiterbildungen sind Gegenstand der Unteransprüche.

Die vorliegende Erfindung betrifft einen Tilger für eine Schwingungsmaschine mit einem Kompensationssystem zur Kompensation von durch eine Schwingmasse erzeugten Schwingungskräften. Die Schwingungsmaschine ist vorzugsweise ein Schwingförderer zum Fördern von Schüttgut und/oder eine Siebmaschine zum Sieben von Schüttgut.

Der Tilger ist vorzugsweise dazu ausgebildet, die Übertragung von Schwingungen von der Schwingungsmaschine auf ein mit dem Tilger verbundenes Fundament zu dämpfen und/oder von der Schwingungsmaschine aufgrund der Schwingung in ein Fundament eingebrachte Fundamentlasten zu verringern oder zu kompensieren. Erfindungsgemäß weist das Kompensationssystem mindestens eine Feder mit veränderbarer Federhärte auf. Hierdurch können die Dämpfungseigenschaften des Kompensationssystems flexibel und/oder gezielt angepasst werden, insbesondere an veränderte Schwingungsbedingungen. Insbesondere lässt sich die Eigenfrequenz des Tilgers bzw. Kompensationssystems verändern. Dies ermöglicht eine Anpassung der SChwingungskompensation an eine veränderte Antriebs- bzw. Schwingungsfrequenz der Schwingungsmaschine und/oder an eine veränderte schwingende Masse.

Die Feder mit veränderbarer Federhärte ist vorzugsweise eine pneumatische und/oder hydraulische Feder, vorzugsweise eine Luftfeder bzw. ein Balgzylinder. Insbesondere ist die Federhärte über einen Gasund/oder Fluiddruck innerhalb der Feder veränderbar. Dies ermöglicht eine einfache, schnelle und/oder elektronisch steuerbare Anpassung bzw. Veränderung der Federhärte und ist darüber hinaus kostengünstig.

Das Kompensationssystem weist vorzugsweise zwei Federn mit veränderbarer Federhärte auf, die auf gegenüberliegenden Seiten eines Lagerpunkts des Tilgers und/oder symmetrisch zu dem Lagerpunkt angeordnet und/oder mit dem Lagerpunkt gekoppelt sind und/oder die gemeinsam als Zug-Druck-Feder wirken. Die Federn sind vorzugsweise baugleich.

Vorzugsweise weist das Kompensationssystem ein Federpaar aus zwei insbesondere baugleichen Federn mit veränderbarer Federhärte auf, wobei die Federn des Federpaars derart angeordnet sind, dass bei positiver Auslenkung einer Tilgermasse aus einer Ruhelage eine der Federn des Federpaars komprimiert wird und bei negativer Auslenkung der Tilgermasse aus der Ruhelage die andere Feder des Federpaars komprimiert wird. Dies ist einer optimalen Schwingungsdämpfung zuträglich.

Die genannte Anordnung der zwei Federn bzw. des Federpaars ermöglicht eine effektive Dämpfung bzw. Kompensation von Schwingungen, insbesondere da durch die Anordnung eine Veränderung bzw. Anpassung der Federhärte bzw. der Eigenfrequenz des Kompensationssystems ermöglicht wird.

Bevorzugt weist das Kompensationssystem mindestens eine Feder, vorzugsweise mehrere Federn, mit unveränderbarer Federhärte auf. Dies ist kostengünstig und ermöglicht eine Dämpfung bzw. Schwingungskompensation auch bei großen schwingenden Massen. Weiter wird durch die Kombination der Feder(n) mit veränderbarer Federhärte mit Feder(n) mit unveränderbarer Federhärte ein optimaler Kompromiss zwischen einer Anpassbarkeit der Schwingungskompensation einerseits und einem kostengünstigen und einfachen Aufbau, der zur Kompensation von großen Schwingungskräften geeignet ist, andererseits erreicht.

Die Feder mit veränderbarer Federhärte ist vorzugsweise parallel zu der Feder mit unveränderbarer Federhärte geschaltet bzw. angeordnet. Auf diese Weise werden die wirkenden Kräfte auf die verschiedenen Federn verteilt und es wird eine Einstellung bzw. Veränderung der Federhärte des Kompensationssystems ermöglicht. Insbesondere werden durch die Parallelschaltung der Federn die Vorteile der verschiedenen Federarten kombiniert, sodass die Parallelschaltung einen optimalen Kompromiss darstellt.

Die Feder mit unveränderbarer Federhärte ist vorzugsweise als Schraubenfeder und/oder Zug-Druck-Feder, ausgebildet ist. Grundsätzlich können auch andere Federn, wie z. B. Blattfedern, verwendet werden. Derartige Federn sind kostengünstig, wartungsarm, einfach zu montieren und haben eine lange Lebensdauer. Ferner können Sie mit nahezu beliebigen Federhärten hergestellt werden und sind auch zur Dämpfung bei hohen Kräften aufgrund großer schwingender Massen von einigen hundert Kilogramm bis zu über eintausend Kilogramm geeignet.

Vorzugsweise weist das Kompensationssystem ein erste Federanordnung und eine zweite Federanordnung auf, wobei die erste Federanordnung einen Lagerpunkt des Tilgers mit der Schwingmasse koppelt und die zweite Federanordnung den Lagerpunkt mit einer Tilgermasse koppelt, wobei mindestens eine der Federanordnungen mindestens eine Feder mit veränderbarer Federhärte und mindestens eine parallel dazu geschaltete bzw. angeordnete Feder mit unveränderbarer Federhärte aufweist/aufweisen. Hierdurch werden die Vorteile der verschiedenen Federarten kombiniert und ein optimaler Kompromiss bei der Erfüllung unterschiedlicher Anforderungen erreicht.

Besonders bevorzugt weist ausschließlich eine der Federanordnungen, insbesondere die zweite Federanordnung, die Feder bzw. Federn mit veränderbarer Federhärte auf. Es hat sich gezeigt, dass hierdurch bereits die gewünschte Anpassbarkeit der Schwingungskompensation bzw. der Eigenfrequenz des Tilgers realisiert werden kann.

Der Tilger weist vorzugsweise eine Umlenkeinrichtung mit einem Umlenkhebel auf, über den die Schwingmasse mit einer Tilgermasse gekoppelt ist, sodass die Tilgermasse und die Schwingmasse gegenphasige Schwingungen ausführen. Der Umlenkhebel weist vorzugsweise zwei Hebelarme mit einem Hebelarmverhältnis auf, das in etwa dem Massenverhältnis von Schwingmasse zu Tilgermasse entspricht. Besonders bevorzugt weisen die zwei Hebelarme ein Hebelarmverhältnis von etwa 2:1 auf, insbesondere sodass eine Auslenkung der Schwingmasse in eine etwa doppelt so große Auslenkung der Tilgermasse umgelenkt wird. Das Hebelarmverhältnis entspricht in etwa dem Verhältnis der Massen, um das erforderliche Schwingweitenverhältnis zu erzielen. Die Umlenkung ermöglicht die Verwendung einer Tilgermasse, die kleiner als die Schwingmasse ist. Bei einem Hebelarmverhältnis von 2:1 beispielsweise muss für eine optimale Schwingungsdämpfung bzw. Kompensation die Tilgermasse nur die Hälfte der Schwingmasse betragen. Dies ist kostensparend, materialsparend und erleichtert die Herstellung und Aufstellung bzw. Inbetriebnahme des Tilgers bzw. der Schwingungsmaschine.

Der Umlenkhebel ist vorzugsweise über eine Federeinrichtung mit der Tilgermasse gekoppelt. Es hat sich gezeigt, dass hierdurch die Schwingungskompensation weiter optimiert werden kann.

Der Tilger und/oder das Kompensationssystem ist/sind vorzugsweise zur mechanischen und/oder passiven Schwingungskompensation ausgebildet. Dies hat den Vorteil, dass der Tilger im Vergleich zu anderen Lösungen, insbesondere sogenannten aktiven Systemen, kostengünstig und wartungsarm ist.

Der Tilger weist vorzugsweise eine elektronische Steuerung bzw. Regelung zur insbesondere automatischen und/oder adaptiven Einstellung der Federhärte der Feder mit veränderbarer Federhärte auf. Dies ermöglicht die Einstellung bzw. Veränderung der Federhärte des Kompensationssystems beim installierten Tilger bzw. während des Betriebs.

Gemäß einem weiteren Aspekt betrifft die vorliegende Erfindung eine Schwingungsmaschine, insbesondere einen Schwingförderer zum Fördern von Schüttgut und/oder eine Siebmaschine zum Sieben von Schüttgut, mit einem oder mehreren wie hierin beschrieben ausgebildeten Tilgern. Die Vorteile des Tilgers werden durch die Schwingungsmaschine entsprechend erreicht.

Die vorgenannten Aspekte und Merkmale der vorliegenden Erfindung sowie die sich aus den Ansprüchen und der nachfolgenden Beschreibung ergebenden Aspekte und Merkmale der vorliegenden Erfindung können grundsätzlich unabhängig voneinander, aber auch in beliebiger Kombination realisiert werden.

Weitere Aspekte, Vorteile, Merkmale und Eigenschaften der vorliegenden Erfindung ergeben sich aus den Ansprüchen und der nachfolgenden Beschreibung bevorzugter Ausführungsformen anhand der Figuren. Es zeigt:

Fig. 1     eine schematische Skizze eines erfindungsgemäßen Tilgers;

Fig. 2     eine perspektivische Darstellung eines erfindungsgemäßen Tilgers;

Fig. 3     die perspektivische Darstellung des Tilgers gemäß Fig. 2 mit einem mittigen Schnitt durch den Tilger;

Fig. 4     einen Schnittdarstellung des Tilgers gemäß Fig. 2 und 3; und

Fig. 5     eine Seitenansicht einer erfindungsgemäßen Schwingungsmaschine mit mehreren erfindungsgemäßen Tilgern.

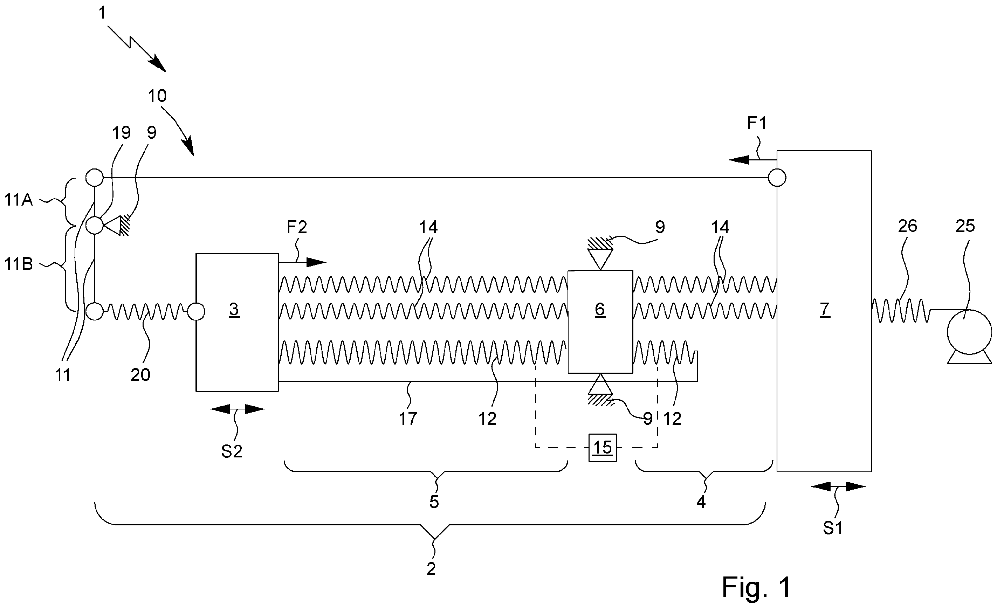

Fig. 1 zeigt einen erfindungsgemäßen Tilger 1 mit einem Kompensationssystem 2 in einer schematischen Skizze. Tilger 1 wie hierin beschrieben werden teilweise auch als "Schwingungsdämpfer" bezeichnet.

Der Tilger 1 bzw. das Kompensationssystem 2 weist vorzugsweise eine Tilgermasse 3, eine erste Federanordnung 4, eine zweite Federanordnung 5, und/oder einen Lagerpunkt 6 auf. Vorzugsweise ist/sind die erste Federanordnung 4 und/oder die zweite Federanordnung 5 an dem Lagerpunkt 6 gelagert.

Eine Federanordnung im Sinne der vorliegenden Erfindung weist mindestens eine Feder, vorzugsweise mehrere Federn, auf oder besteht daraus. Die Federn einer Federanordnung wirken vorzugsweise zwischen denselben Komponenten und/oder sind zwischen denselben Komponenten angeordnet. Eine Federanordnung kann insbesondere mehrere parallel angeordnete bzw. wirkende Federn aufweisen. Im Sinne der vorliegenden Erfindung bilden Federn, die nicht zwischen denselben Komponenten angeordnet sind und/oder wirken, vorzugsweise keine Federanordnung bzw. sind nicht Teil derselben Federanordnung.

Ein Lagerpunkt im Sinne der vorliegenden Erfindung ist vorzugsweise ein Teil oder Bauteil eines Tilgers, das zumindest im Wesentlichen unbewegt und/oder ortsfest ist. Insbesondere ist der Lagerpunkt starr mit einem Fundament verbunden oder verbindbar.

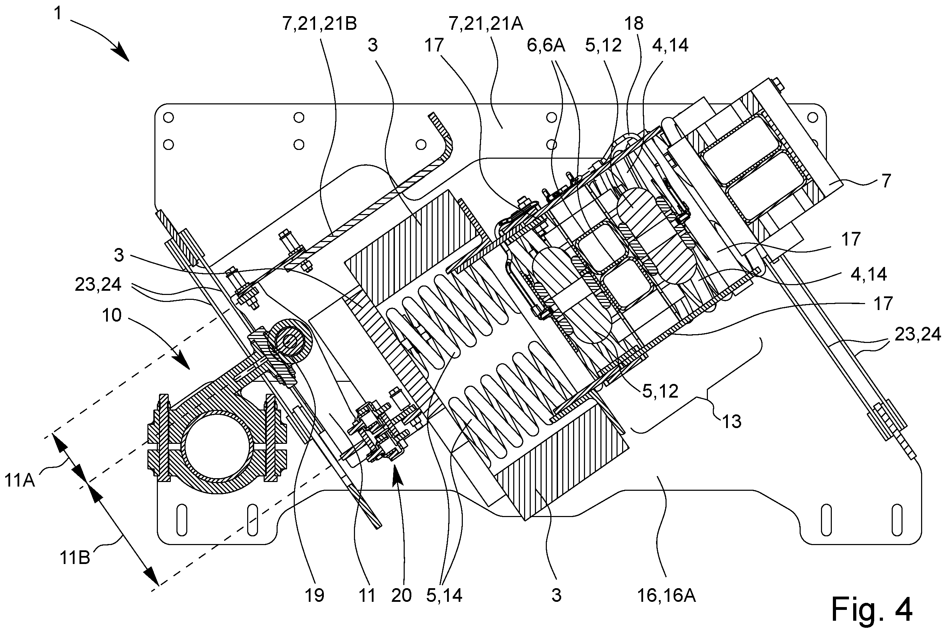

Der Tilger 1 ist vorzugsweise dazu ausgebildet, Schwingungen S1 einer Schwingmasse 7 zu kompensieren. Vorzugsweise ist der Tilger 1 hierzu mit der Schwingmasse 7 koppelbar bzw. gekoppelt. Weiter vorzugsweise weist der Tilger 1 auch zumindest einen geringen Teil der Schwingmasse 7, die vorzugsweise mehrere Bauteile aufweist, auf. Überwiegend ist die Schwingmasse 7 jedoch vorzugsweise nicht Teil des Tilgers 1. Die Schwingmasse 7 wird vorzugsweise zumindest überwiegend durch einen Teil einer (in Fig. 1 nicht weiter dargestellten, aber in Fig. 4 gezeigten) Schwingungsmaschine 8, insbesondere einen Trog der Schwingungsmaschine 8 o. dgl., und/oder Schüttgut, das mit der Schwingungsmasche 8 bearbeitet, insbesondere gefördert, wird, gebildet.

Der Tilger 1 ist vorzugsweise ein Teil einer Schwingungsmaschine 8 und/oder in eine Schwingungsmaschine 8 integriert.

Die Schwingmasse 7 ist vorzugsweise über die erste Federanordnung 4 mit dem Lagerpunkt 6 gekoppelt bzw. verbunden bzw. an dem Lagerpunkt 6 gelagert. Die erste Federanordnung 4 ist also vorzugsweise zwischen dem Lagerpunkt 6 und der Schwingmasse 7 angeordnet.

Bei Betrieb der Schwingungsmaschine 8 führt die Schwingmasse 7 Schwingungen S1, wie durch den Doppelpfeil in Fig. 1 angedeutet, aus. Somit wirken durch die Schwingungen S1 der Schwingmasse 7 verursachte Schwingungskräfte F1 auf den Lagerpunkt 6 ein.

Der Tilger 1, insbesondere der Lagerpunkt 6, ist vorzugsweise mit einem Fundament 9, das in Fig. 1 nur schematisch angedeutet ist, koppelbar bzw. bei Betrieb des Tilgers 1 bzw. der Schwingungsmaschine 8 gekoppelt. Insbesondere ist der Tilger 1 über den Lagerpunkt 6 fest bzw. starr mit dem Fundament 9 verbindbar bzw. verbunden. Somit wirken die Schwingungskräfte vorzugsweise auf das Fundament 9 bzw. resultieren in dynamischen Fundamentlasten.

Dynamische Fundamentlasten im Sinne der vorliegenden Erfindung sind insbesondere Kräfte bzw. Belastungen, die durch Schwingungen S1 der Schwingmasse 7 verursacht sind und/oder in das Fundament 9 eingeleitet werden. Insbesondere stellt die reine Gewichtskraft der Schwingmasse 7 bzw. der Schwingungsmaschine 8 keine dynamische Fundamentlast, sondern eine statische Fundamentlast dar.

Der Tilger 1 dient dazu bzw. ist dazu ausgebildet, die dynamischen Fundamentlasten bzw. Schwingungskräfte zumindest teilweise, bevorzugt möglichst vollständig, zu kompensieren. Hierzu weist der Tilger 1 das Kompensationssystem 2 auf.

Die Grundidee des Tilgers 1 besteht darin, zu den Schwingungskräften gleich große und gegenphasige Schwingungen bzw. Kräfte zu erzeugen, sodass die auf den Lagerpunkt 6 einwirkenden Kräfte kompensiert werden. Anders ausgedrückt wird durch die Schwingungen S1 der Schwingmasse 7 auf den Lagerpunkt 6 eine dynamische bzw. zeitabhängige Kraft $F1(t)$ ausgeübt, wobei der Tilger 1 dazu ausgebildet ist, eine dynamische bzw. zeitabhängige Kraft $F2(t)$ auf den Lagerpunkt 6 auszuüben, wobei zumindest näherungsweise $F2(t) = -1F(t)$ gilt, sodass für die insgesamt auf den Lagerpunkt 6 einwirkenden Kräfte F(t) zumindest näherungsweise F(t) = F1(t) + F2(t) = 0 gilt.

Hierzu weist der Tilger 1 die Tilgermasse 3 auf. Die Tilgermasse 3 übt vorzugsweise die vorgenannte Kraft F2 auf den Lagerpunkt 6 aus bzw. ist hierzu ausgebildet.

Die Tilgermasse 3 weist vorzugsweise mindestens ein massives und/oder blockartiges Bauteil mit großer Masse bzw. großem Gewicht, vorzugsweise im Bereich von mehreren hundert Kilogramm auf oder besteht daraus. Die Tilgermasse 3 bzw. das genannte Bauteil besteht vorzugsweise aus Metall oder einem anderen Material mit hoher Dichte.

Insbesondere weist die Tilgermasse 3 also einen oder mehrere Metallblöcke auf, der/die vorzugsweise zumindest einen Großteil des Gewichts der Tilgermasse 3 ausmacht/ausmachen. Weitere Bauteile, die starr mit dem Metallblock bzw. den Metallblöcken verbunden sind bzw. gemeinsam mit diesem/diesen schwingen, sind vorzugsweise jedoch auch Teil der Tilgermasse 3.

Die Tilgermasse 3 ist vorzugsweise über die zweite Federanordnung 5 mit dem Lagerpunkt 6 gekoppelt bzw. verbunden bzw. an dem Lagerpunkt 6 gelagert. Die zweite Federanordnung 5 ist insbesondere zwischen dem Lagerpunkt 6 und der Tilgermasse 3 angeordnet. Die zweite Federanordnung 5 und die Tilgermasse 3 sind vorzugsweise derart angeordnet, dass sie der ersten Federanordnung 4 und der Schwingmasse 7 entgegenwirken bzw. die Kräfte, die von der Schwingmasse 7 über die erste Federanordnung 4 auf den Lagerpunkt 6 ausgeübt werden, kompensieren.

Vorzugsweise ist die Tilgermasse 3 mit der Schwingmasse 7 gekoppelt.

Insbesondere weist der Tilger 1 eine Umlenkeinrichtung 10 mit einem Umlenkhebel 11 auf, über den die Tilgermasse 3 mit der Schwingmasse 7 gekoppelt ist. Durch den Umlenkhebel 11 wird insbesondere erreicht, dass die Schwingung S2 der Tilgermasse 3 gegenphasig zu der Schwingung S1 der Schwingmasse 7 ist.

Durch die Umlenkeinrichtung 10 bzw. den Umlenkhebel 11 ist insbesondere ein zweiseitiger Hebel mit zwei Hebelarmen 11A, 11B realisiert. Der (erste) Hebelarm 11A ist mit der Schwingmasse 7 verbunden bzw. verbindbar, insbesondere über eine Verbindung 12 der Umlenkeinrichtung 10. Der (zweite) Hebelarm 11B ist mit der Tilgermasse 3 verbunden.

Das Hebelarmverhältnis der Hebelarme 11B, 11A wird vorzugsweise anhand des Verhältnisses von der Schwingmasse 7 zur Tilgermasse 3 gewählt, insbesondere sodass das Hebelarmverhältnis der Hebelarme 11B, 11A in etwa dem Verhältnis von Schwingmasse 7 zu Tilgermasse 3 entspricht.

Vorzugsweise beträgt das Hebelarmverhältnis der Hebelarme 11B, 11A etwa 2:1. Mit anderen Worten ist der (zweite) Hebelarm 11B, der mit der Tilgermasse 3 verbunden ist, bevorzugt zumindest im Wesentlichen doppelt so lang wie der (erste) Hebelarm 11A, der mit der Schwingmasse 7 verbunden ist. Hierdurch beträgt die Auslenkung der Tilgermasse 3 bei einer Schwingung S2 zumindest im Wesentlichen das Doppelte der Auslenkung der Schwingmasse 7 bei einer Schwingung S1 und die Schwingung S2 der Tilgermasse 3 ist gegenphasig zur Schwingung S1 der Schwingmasse 7.

Die Schwingmasse 7 und/oder die Tilgermasse 3 hat/haben vorzugsweise ein Gewicht von mindestens 100 kg oder mehr, besonders bevorzugt mindestens 500 kg oder mehr, insbesondere mindestens 1000 kg oder mehr.

Weiter beträgt das Gewicht G7 der Schwingmasse 7 vorzugsweise zumindest im Wesentlichen das Doppelte des Gewichts G3 der Tilgermasse 3 (G7:G3 ≈ 2:1).

Die erste Federanordnung 4 weist eine Federhärte K4 auf und die zweite Federanordnung 5 weist eine Federhärte K5 auf. Vorzugsweise ist die Federhärte K4 zumindest im Wesentlichen doppelt so groß wie die Federhärte K5 (K4:K5 ≈ 2:1).

Die Federhärte ist insbesondere ein Maß für das Verhältnis der auf eine Feder wirkenden Kraft zur dadurch bewirkten Auslenkung der Feder.

Auf diese Weise weist das System aus Tilgermasse 3 und zweiter Federanordnung 5 vorzugsweise zumindest im Wesentlichen die gleiche Eigenfrequenz $\omega$ auf wie das System aus Schwingmasse 7 und erster Federanordnung 4. Die Eigenfrequenz $\omega$ ist proportional zu der Wurzel aus dem Quotienten der Federhärte $k$ und der Masse $m$ ( $\omega \propto \sqrt{k/m}$ ). Außerdem wird die Kraft F1, die die Schwingmasse 7 über die erste Federanordnung 4 auf den Lagerpunkt 6 ausübt, (idealerweise exakt) kompensiert durch die Kraft F2, die die Tilgermasse 3 über die zweite Federanordnung 5 auf den Lagerpunkt 6 ausgeübt.

Die vorstehenden Erläuterungen beziehen sich auf eine idealisierte Betrachtungsweise anhand der Skizze aus Fig. 1. In der Realität ist eine exakte Kompensation der Schwingungskräfte der Schwingmasse 7 schwieriger. Dies ist insbesondere darin begründet, dass die Schwingmasse 7 einerseits nicht exakt bekannt ist und sich andererseits während des Betriebs der Schwingungsmaschine 8 ändern kann, wenn ein Teil des mit der Schwingungsmaschine 8 zu verarbeitenden Schüttguts an die Schwingungsmaschine 8 "ankoppelt" bzw. einen Teil der Schwingmasse 7 bildet.

Bei der nachfolgenden Beschreibung von Aspekten, Merkmalen und Eigenschaften der vorliegenden Erfindung wird auf die Figuren 1 bis 4 gemeinsam Bezug genommen.

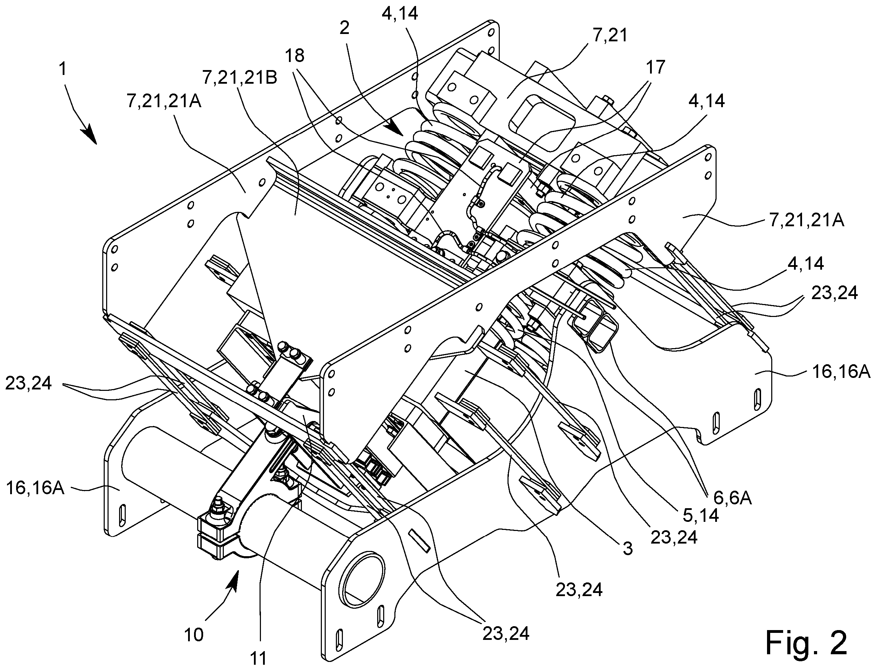

Fig. 2 zeigt einen erfindungsgemäßen Tilger 1 in einer perspektivischen Ansicht.

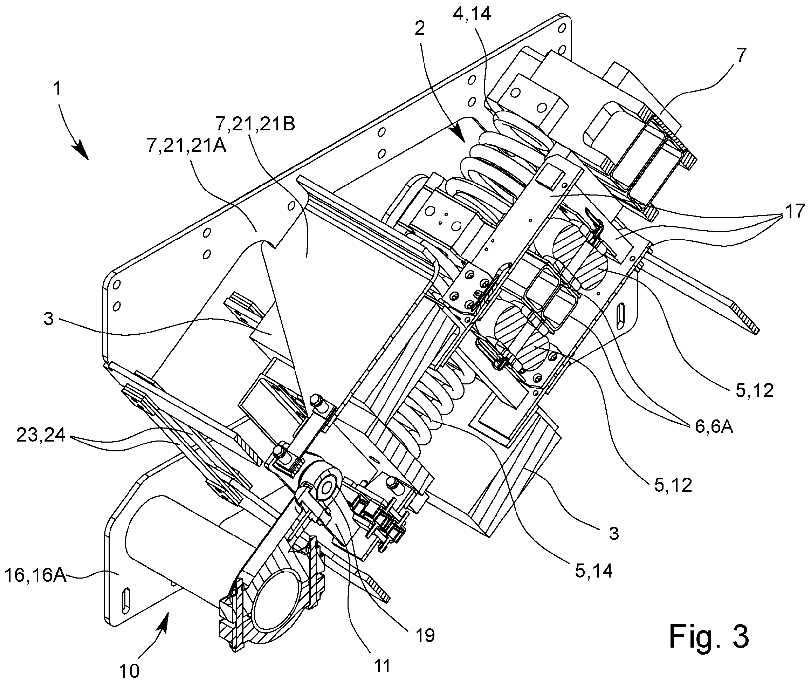

Fig. 3 zeigt den Tilger 1 in einer perspektivischen Schnittdarstellung. Fig. 4 zeigt den Tilger 1 in einer Schnittdarstellung, wobei die Schnittebene in Fig. 4 die gleiche ist wie in Fig. 3.

Vorzugsweise ist eine Federhärte des Tilgers 1 bzw. Kompensationssystems 2 oder eines Teils davon, insbesondere der zweiten Federanordnung 5, veränderbar, insbesondere während des Betriebs des Tilgers 1 und/oder der Schwingungsmaschine 8. Insbesondere ist die Federhärte des Kompensationssystems 2 oder eines Teils des Kompensationssystems 2 ohne Austausch von Teilen, insbesondere Federn, veränderbar und/oder durch Veränderung der Federeigenschaften, insbesondere Federhärten, der Federanordnungen 4, 5 bzw. deren Federn, veränderbar.

Die Federhärte des Kompensationssystems 2 und/oder der ersten und/oder zweiten Federanordnung 4, 5 ergibt sich vorzugsweise aus den Federhärten der jeweiligen Federn, insbesondere aus einer Addition der Federhärten und/oder der Kehrwerte der Federhärten der Federn, je nachdem, ob die Federn parallel und/oder in Reihe geschaltet sind.

Die Federhärte der ersten Federanordnung 4 beträgt vorzugsweise mindestens 1000 N/mm oder mehr und/oder höchstens 6000 N/mm oder weniger, insbesondere zwischen 2000 N/mm und 4000 N/mm. Es sind grundsätzlich jedoch auch wesentlich größere Federhärten der ersten Federanordnung 4 möglich.

Die Federhärte der zweiten Federanordnung 5 beträgt vorzugsweise etwa die Hälfte der Federhärte der ersten Federanordnung 4. Die Federhärte der zweiten Federanordnung 5 beträgt also vorzugsweise mindestens 500 N/mm oder mehr und/oder höchstens 3000 N/mm oder weniger, insbesondere zwischen 1000 N/mm und 2000 N/mm. Es sind grundsätzlich jedoch auch wesentlich größere Federhärten der zweiten Federanordnung 5 möglich.

Erfindungsgemäß weist das Kompensationssystem 2 mindestens eine Feder 12 mit veränderbarer Federhärte auf. Vorzugsweise weist die erste Federanordnung 4 die Feder 12 mit veränderbarer Federhärte auf. Dies erlaubt insbesondere eine Einstellung bzw. Anpassung der Federhärte des Kompensationssystems 2 oder eines Teils davon, insbesondere der zweiten Federanordnung 5. Hierdurch kann insbesondere die Eigenfrequenz an die Schwingmasse 7 bzw. eine Veränderung der Schwingmasse 7 angepasst und somit die Kompensation der Schwingungskräfte optimiert werden.

Die Feder 12 mit veränderbarer Federhärte ist vorzugsweise eine pneumatische und/oder hydraulische Feder. Eine pneumatische bzw. hydraulische Feder ist insbesondere eine Feder, deren Federwirkung auf einem pneumatischen bzw. hydraulischen Prinzip beruht und/oder dessen Federhärte pneumatisch bzw. hydraulisch veränderbar ist.

Die Federhärte der Feder 12 ist vorzugsweise bei Betrieb des Tilgers 1 veränderbar.

Besonders bevorzugt ist die Feder 12 mit veränderbarer Federhärte eine Luftfeder bzw. ein Balgzylinder. Insbesondere ist über einen Gas- und/oder Fluiddruck innerhalb der Feder 12 die Federhärte einstellbar bzw. veränderbar.

Das Kompensationssystem 2 weist vorzugsweise zwei, im Darstellungsbeispiel genau zwei, Federn 12 mit veränderbarer Federhärte auf.

Die Federn 12 mit veränderbarer Federhärte bilden vorzugsweise ein Federpaar 13, wobei das Federpaar 13 (genau) zwei einander zugeordnete und/oder zusammenwirkende Federn 12 aufweist oder daraus gebildet ist.

Grundsätzlich kann das Kompensationssystem 2 auch mehr als zwei Federn 12 mit veränderbarer Federhärte bzw. mehr als ein Federpaar 13 aufweisen, insbesondere wobei das Kompensationssystem 2 eine gerade Anzahl an Federn 12 mit veränderbarer Federhärte aufweist. Für eine solche Ausführungsform gelten die nachfolgenden Erläuterungen, bei denen vorranging auf das Darstellungsbeispiel mit genau zwei Federn 12 mit veränderbarer Federhärte eingegangen wird, entsprechend.

Vorzugsweise sind die Federn 12 mit veränderbarer Federhärte, insbesondere die Federn 12 eines Federpaars 13, baugleich.

Die zwei baugleichen Federn 12 mit veränderbarer Federhärte bzw. die Federn 12 des Federpaars 13 bilden vorzugsweise zusammen eine Zug-Druck-Feder und/oder wirken zusammen als Zug-Druck-Feder.

Eine Zug-Druck-Feder im Sinne der vorliegenden Erfindung ist insbesondere eine Feder, die sowohl bei Zugbelastung bzw. Expansion aus der Ruhelage als auch bei Druckbelastung bzw. Komprimierung aus der Ruhelage als Feder wirkt bzw. der Bewegung eine Federkraft entgegensetzt.

Die zwei (baugleichen) Federn 12 mit veränderbarer Federhärte bzw. Federn 12 des Federpaars 13 sind vorzugsweise symmetrisch zu dem Lagerpunkt 6 angeordnet und/oder auf gegenüberliegenden Seiten des Lagerpunkts 6 angeordnet.

Insbesondere sind die zwei (baugleichen) Federn 12 mit veränderbarer Federhärte bzw. Federn 12 des Federpaars 13 derart angeordnet, dass bei positiver Auslenkung der Tilgermasse 3 aus einer Ruhelage eine der Federn 12 (des Federpaars 13) komprimiert wird und bei negativer Auslenkung der Tilgermasse 3 aus der Ruhelage die andere Feder 12 (des Federpaars 13) komprimiert wird.

Die Tilgermasse 3 schwingt vorzugsweise zumindest im Wesentlichen entlang einer linearen Achse, wie in Fig. 1 durch den Doppelpfeil, der die Schwingungen S2 der Tilgermasse 3 symbolisiert, schematisch angedeutet ist. Eine "positive" und "negative" Auslenkung der Tilgermasse 3 aus der Ruhelage sind Auslenkungen aus der Ruhelage der Tilgermasse 3 entlang dieser linearen Achse in entgegengesetzten Richtungen. Insbesondere ist eine positive Auslenkung eine Bewegung der Tilgermasse 3 aus der Ruhelage in Richtung des Lagerpunkts 6 und eine negative Auslenkung eine Bewegung der Tilgermasse 3 aus der Ruhelage von dem Lagerpunkt 6 weg oder umgekehrt. Die Ruhelage der Tilgermasse 3 ist insbesondere die Lage der Tilgermasse 3, wenn diese sich nicht in Schwingung befindet.

Das Kompensationssystem 2, insbesondere die zweite Federanordnung 5, weist vorzugsweise einen Rahmen 17 auf. Der Rahmen 17 ist vorzugsweise starr mit der Tilgermasse 3 verbunden und/oder relativ zu dem Lagerpunkt 6 bewegbar, insbesondere axial bzw. parallel zur Achse, entlang der die Tilgermasse 3 schwingt. Vorzugsweise ist der Rahmen 17 mehrteilig ausgebildet. Ein Teil bzw. Abschnitt des Rahmens 17 kann durch die Tilgermasse 3 selbst gebildet sein.

Der Rahmen 17 ist insbesondere dazu ausgebildet, eine Schwingungskraft der Tilgermasse 3 so umzulenken, dass sie auf einer der Tilgermasse 3 gegenüberliegenden Seite auf den Lagerpunkt 5 wirkt und/oder von der gleichen Seite auf den Lagerpunkt 6 einwirkt wie die Schwingmasse 7.

Insbesondere ermöglicht der Rahmen 17 eine Anordnung von Federn 12 mit veränderbarer Federhärte auf verschiedenen bzw. gegenüberliegenden Seiten des Lagerpunkts 6 und/oder eine Anordnung von Federn 12 mit veränderbarer Federhärte, die als Zug-Druck-Feder wirkt.

Vorzugsweise ist/sind das Federpaar 13 bzw. die Federn 12 mit veränderbarer Federhärte der zweiten Federanordnung 5 innerhalb des Rahmens 17 angeordnet und/oder umgibt der Rahmen 17 das Federpaar 13 bzw. die Federn 12 mit veränderbarer Federhärte der zweiten Federanordnung 5. Insbesondere sind die Federn 12 mit veränderbarer Federhärte jeweils so angeordnet und/oder mit dem Rahmen 17 und dem Lagerpunkt 6 gekoppelt, dass eine der Federn 12 mit veränderbarer Federhärte bei Auslenkung der Tilgermasse 3 in positiver Richtung komprimiert wird, insbesondere zwischen dem Lagerpunkt 6 und einer ersten Seite des Rahmens 17, und dass die andere Feder 12 mit veränderbarer Federhärte bei Auslenkung der Tilgermasse 3 in negativer Richtung komprimiert werden, insbesondere zwischen dem Lagerpunkt 6 und einer zweiten, der ersten Seite gegenüberliegenden Seite des Rahmens 17.

Das Kompensationssystem 2 weist vorzugsweise mindestens eine, bevorzugt mehrere, Feder/-n 14 mit unveränderbarer Federhärte auf.

Vorzugsweise weist die erste Federanordnung 4 mindestens eine Feder 14 mit unveränderbarer Federhärte auf und/oder ist mindestens eine Feder 14 mit unveränderbarer Federhärte zwischen dem Lagerpunkt 6 und der Schwingmasse 7 angeordnet. Weiter vorzugsweise weist die zweite Federanordnung 5 mindestens eine Feder 14 mit unveränderbarer Federhärte auf und/oder ist mindestens eine Feder 14 mit unveränderbarer Federhärte zwischen dem Lagerpunkt 6 und der Tilgermasse 3 angeordnet.

Es ist also bevorzugt, dass mindestens eine der Federanordnungen 4, 5, insbesondere sowohl die erste Federanordnung 4 als auch die zweite Federanordnung 5, mindestens eine Feder 14 mit unveränderbarer Federhärte aufweist/aufweisen. Im Darstellungsbeispiel weisen die erste und die zweite Federanordnung 4, 5 jeweils mehrere Federn 14 mit unveränderbarer Federhärte auf.

Die Feder/Federn 14 mit unveränderbarer Federhärte ist/sind vorzugsweise (jeweils) als Schraubenfeder und/oder als Zug-Druck-Feder ausgebildet.

Vorzugsweise ist mindestens eine Feder 12 mit veränderbarer Federhärte zu mindestens einer Feder 14 mit unveränderbarer Federhärte parallel geschaltet bzw. angeordnet, insbesondere bei der zweiten Federanordnung 5. Dies ist insbesondere in Fig. 1 schematisch dargestellt.

Dabei ist es besonders bevorzugt, dass ausschließlich die zweite Federanordnung 5 eine Feder 12 mit veränderbarer Federhärte und mindestens eine parallel dazu angeordnete/geschaltete Feder 14 mit unveränderbarer Federhärte aufweist.

Grundsätzlich ist es jedoch möglich, dass alternativ oder zusätzlich die erste Federanordnung 4 eine Feder 12 mit veränderbarer Federhärte und mindestens eine parallel dazu angeordnete/geschaltete Feder 14 mit unveränderbarer Federhärte aufweist.

Die erste Federanordnung 4 weist vorzugsweise (genau) zwei oder vier Federn 14 mit unveränderbarer Federhärte auf, bevorzugt wobei die erste Federanordnung 4 keine Feder 12 mit veränderbarer Federhärte aufweist. Die zweite Federanordnung 5 weist vorzugsweise mindestens eine, besonders bevorzugt mindestens oder genau zwei Federn 12 mit veränderbarer Federhärte bzw. ein dadurch gebildetes Federpaar 13 auf, bevorzugt wobei die zweite Federanordnung 5 (genau) zwei oder vier Federn 14 mit unveränderbarer Federhärte aufweist. Die Anzahl der Federn 12, 14 der ersten und zweiten Federanordnung 4, 5 kann grundsätzlich jedoch auch anders gewählt werden.

Der Tilger 1 und/oder das Kompensationssystem 2 ist/sind vorzugsweise zur (rein) mechanischen und/oder passiven Schwingungskompensation ausgebildet. Die Kompensation der Schwingungen bzw. Schwingungskräfte erfolgt also vorzugsweise durch mechanisch und/oder passiv arbeitende Komponenten, insbesondere durch die Federn 12 mit veränderbarer Federhärte, die Federn 14 mit unveränderbarer Federhärte und/oder die Tilgermasse 3 bzw. das Zusammenspiel dieser Komponenten.

Insbesondere weist der Tilger 1 keine elektrischen, motorischen und/oder aktiv gesteuerte Komponenten zur Schwingungskompensation auf.

Ungeachtet dessen weist der Tilger 1 vorzugsweise eine elektronische Steuerung bzw. Regelung 15 zur insbesondere automatischen und/oder adaptiven Einstellung, Steuerung und/oder Regelung der Federhärte des Kompensationssystems 2, insbesondere der zweiten Federanordnung 5 bzw. der Federn 12 mit veränderbarer Federhärte, auf. Die Steuerung/Regelung 15 ist vorzugsweise dazu ausgebildet, einen Druck, insbesondere Fluiddruck und/oder Luftdruck, innerhalb der Feder(n) 12 mit veränderbarer Federhärte einzustellen, anzupassen und/oder zu ändern, sodass sich die Federhärte dieser Feder(n) 12 ändert. Die Steuerung/Regelung 15 ist vorzugsweise also zur Steuerung und/oder Regelung der Federhärte und/oder des Luft- bzw. Fluiddrucks der Federn 12 mit veränderbarer Federhärte ausgebildet.

Im Sinne der vorliegenden Erfindung ist auch durch die Federn 12 mit veränderbarer Federhärte in Kombination mit der Steuerung/Regelung 15 eine rein mechanische und/oder passive Schwingungskompensation realisiert, da die elektronische Steuerung/Regelung 15 nicht aktiv an der Schwingungskompensation beteiligt ist bzw. in diese eingreift, sondern lediglich dazu dient, Parameter einzustellen, die Einfluss auf die Schwingungskompensation haben. Die Feder 12, deren Federhärte durch die Steuerung/Regelung 15 veränderbar ist bzw. verändert wird, arbeitet nämlich rein passiv bzw. mechanisch und unabhängig von der Steuerung/-Regelung 15.

Der Tilger 1 weist vorzugsweise ein Hydraulik- und/oder Pneumatiksystem auf. Das Hydraulik- und/oder Pneumatiksystem ist vorzugsweise mit den Federn 12 mit veränderbarer Federhärte gekoppelt bzw. verbunden oder weist diese auf. Vorzugsweise weist das Hydraulik- und/oder Pneumatiksystem die Steuerung/Regelung 15 auf. Weiter weist das Hydraulik- und/oder Pneumatiksystem vorzugsweise entsprechende Peripherie, beispielsweise Leitungen 18 zur Versorgung der Federn 12 mit veränderbarer Federhärte mit Druckluft o. dgl., einen (nicht dargestellten) Kompressor zur Erzeugung von Druckluft o. dgl., einen (nicht dargestellten) Druckluftspeicher o. dgl. und/oder eine Pumpe zur Förderung von Druckluft o. dgl. auf.

Der Tilger 1 weist vorzugsweise einen Fundamentanschluss 16 auf. Mittels des Fundamentanschlusses 16 ist der Tilger 1 an einem Fundament 9 befestigbar bzw. verankerbar, beispielsweise durch Verschrauben des Fundamentanschlusses 16 mit dem Fundament 9.

Vorzugweise ist der Tilger 1 auf dem Fundamentanschluss 16 gelagert bzw. lagerbar und/oder stellt der Fundamentanschluss 16 einen Träger für die weiteren

Komponenten des Tilgers 1, insbesondere das Kompensationssystem 2, dar. Der Fundamentanschluss 16 weist vorzugsweise einen oder mehrere Standfüße des Tilgers 1 auf oder bildet diese.

Es ist jedoch auch möglich, dass der Tilger 1 (im Betrieb) nicht direkt auf dem Fundament 9, sondern auf zwischen dem Fundament 9 und dem Tilger 1 bzw. Fundamentanschluss 16 angeordneten Teilen, beispielsweise Stahlträgern o. dgl., gelagert ist. Über den Fundamentanschluss 16 ist der Tilger 1 daher vorzugsweise zumindest mittelbar mit dem Fundament 9 verbunden bzw. verbindbar.

Der Fundamentanschluss 16 kann mehrteilig ausgebildet sein. Im Darstellungsbespiel weist der Fundamentanschluss 16 zwei Bleche 16A auf, die vorzugsweise seitlich an dem Tilger 1 angeordnet sind und/oder sich in einer Betriebsposition des Tilgers 1 zumindest im Wesentlichen vertikal erstrecken. Hier sind jedoch auch andere Lösungen möglich.

Der Lagerpunkt 6 ist vorzugsweise fest bzw. starr mit dem Fundament 9 verbunden bzw. verbindbar, insbesondere über den Fundamentanschluss 16. Vorzugsweise weist der Lagerpunkt 6 eine oder mehrere Profile bzw. Streben 6A auf oder ist durch diese gebildet. Die Profile/Streben 6A erstrecken sich vorzugsweise zumindest im Wesentlichen horizontal. Im Darstellungsbeispiel sind die Profile/Streben 6A mit den beiden seitlichen Blechen 16A des Fundamentanschlusses 16 fest verbunden und in Durchbrechungen dieser Bleche 16A angeordnet.

Die Umlenkeinrichtung 10 weist eine Drehachse 19 auf, um die der Umlenkhebel 11 drehbar ist. Die Drehachse 19 ist vorzugsweise starr mit dem Fundament 9, dem Fundamentanschluss 16 und/oder dem Lagerpunkt 6 verbunden bzw. gekoppelt.

Der Umlenkhebel 11 ist vorzugsweise über eine Federeinrichtung 20 mit der Tilgermasse 3 gekoppelt. Die Federeinrichtung 20 weist vorzugsweise eine oder mehrere Federn auf, die insbesondere durch Gummielemente gebildet sind. Die Gummielemente sind vorzugsweise flexibel und/oder elastisch. Die Federeinrichtung 20 ermöglicht insbesondere eine unterschiedliche Bewegung der Tilgermasse 3 und der Schwingmasse 7. Dies ist insbesondere im Zusammenhang mit der veränderbaren Federhärte des Kompensationssystems 2 bzw. der Federn 12 mit veränderbarer Federhärte von Vorteil. Es hat sich gezeigt, dass durch Einsatz der Federeinrichtung 20 ein sicherer und stabiler Betrieb des Tilgers 1 auch bei Veränderung der Federhärte der Federn 12 ermöglicht ist.

Die Federhärte der Federeinrichtung 20 ist vorzugsweise um ein Vielfaches größer als die Federhärte der ersten und/oder zweiten Federanordnung 4, 5. Insbesondere ist die Federhärte der Federeinrichtung 20 mindestens fünf Mal oder zehn Mal so groß wie die Federhärte der ersten und/oder zweiten Federanordnung 4, 5.

Vorzugsweise hat die Federeinrichtung 20 eine Federhärte von mehr als 20.000 N/mm, insbesondere mehr als 30.000 N/mm, und/oder weniger als 50.000 N/mm. Es sind grundsätzlich jedoch auch wesentlich größere Federhärten der Federeinrichtung 20 möglich.

Der Tilger 1 weist vorzugsweise einen Troganschluss bzw. Schwingmassenanschluss 21 auf. Mittels des Schwingmassenanschlusses 21 ist der Tilger 1 an der Schwingmasse 7 befestigbar bzw. befestigt, beispielsweise durch Verschrauben mit der Schwingmasse 7.

Der Schwingmassenanschluss 21 kann mehrteilig ausgebildet sein. Im Darstellungsbespiel weist der Schwingmassenanschluss 21 zwei Bleche 21A auf, die vorzugsweise seitlich an dem Tilger 1 angeordnet sind und/oder sich in einer Betriebsposition des Tilgers 1 zumindest im Wesentlichen vertikal erstrecken. Weiter weist im Darstellungsbeispiel der Schwingmassenanschluss 21 ein Verbindungsstück 21B auf, das zur Verbindung der Schwingmasse 7 bzw. eines Fördertrogs 22 der Schwingmaschine 8 mit dem Umlenkhebel 11 ausgebildet ist. Das Verbindungsstück 21B ist vorzugsweise an einer Seite starr mit dem Fördertrog 22. bzw. der Schwingmasse 7 verbunden und an einer anderen, insbesondere gegenüberliegenden Seite, starr mit dem Umlenkhebel 11 verbunden bzw. verbindbar. Hier sind jedoch auch andere Lösungen möglich.

Vorzugsweise weist der Tilger 1 eine Stabilisierungseinrichtung 23 zur Stabilisierung des Tilgers 1 bzw. zur Stabilisierung von Bewegungen/Schwingungen des Tilgers 1 bzw. dessen Bauteilen auf.

Die Stabilisierungseinrichtung 23 verbindet vorzugsweise den Fundamentanschluss 16, insbesondere dessen Bleche 16A, mit dem Schwingmassenanschluss 21, insbesondere dessen Blechen 21A.

Die Stabilisierungseinrichtung 23 weist vorzugsweise eine oder mehrere Blattfedern 24 auf. Die Blattfedern 24 sind vorzugsweise zumindest im Wesentlichen vertikal zur (Haupt-)Schwingungsrichtung der Tilgermasse 3 und/oder der Schwingmasse 7 angeordnet.

Die Blattfedern 24 bestehen vorzugsweise aus glasfaserverstärktem Kunststoff und/oder sind vorzugsweise verwindungssteif. Die Blattfedern 24 sind insbesondere dazu ausgebildet, Schwingungen der Tilgermasse 3 und/oder Schwingmasse 7 senkrecht zur Hauptschwingungsrichtung zu vermeiden oder zu reduzieren.

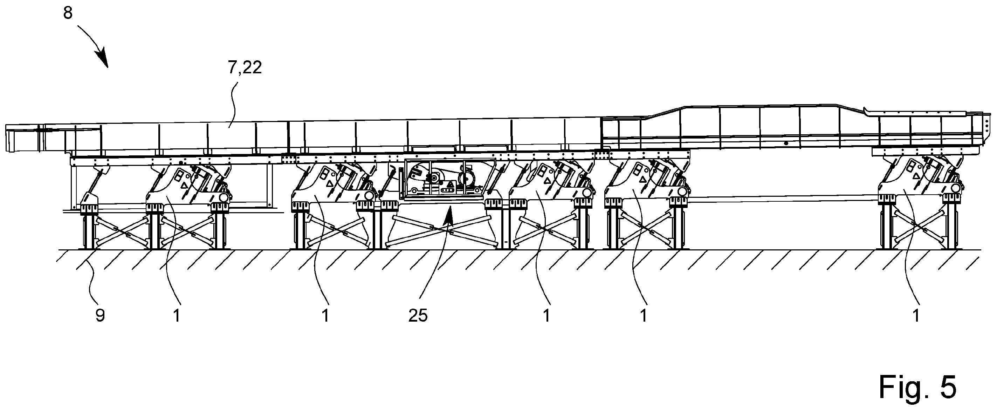

Fig. 5 zeigt eine erfindungsgemäße Schwingungsmaschine 8 in einer Seitenansicht.

Die Schwingungsmaschine 8 weist vorzugsweise mehrere Tilger 1, insbesondere mindestens zwei oder vier Tilger 1, besonders bevorzugt mindestens sechs und/oder höchstens zwanzig Tilger 1, auf.

Die Schwingungsmaschine 8 ist vorzugsweise zumindest teilweise auf den Tilgern 1 gelagert und/oder über die Tilger 1 mit dem Fundament 9 verbunden.

Die Tilger 1 sind vorzugsweise in die Schwingungsmaschine 8 integriert.

Die Schwingungsmaschine 8 ist vorzugsweise ein Schwingförderer zum Fördern von Schüttgut oder eine Siebmaschine zum Sieben von Schüttgut. Im Darstellungsbeispiel gemäß Fig. 8 ist die Schwingungsmaschine 8 ein Schwingförderer.

Die Schwingungsmaschine 8 bzw. der Schwingförderer weist vorzugsweise einen Fördertrog 22 zum Fördern von Schüttgut auf. Der Fördertrog 22 kann aus mehreren miteinander verbundenen Bauteilen bestehen.

Der Fördertrog 22 bildet vorzugsweise einen Teil, insbesondere einen Großteil, der Schwingmasse 7. Ferner bildet vorzugsweise auch zumindest ein Teil des mit dem Fördertrog geförderten Schüttguts einen Teil der Schwingmasse 7.

Die Schwingungsmaschine 8 weist vorzugsweise einen Schubkurbelantrieb 25 zum Antreiben der Schwingmasse 7 bzw. Versetzen der Schwingmasse 7 in Schwingung auf. Der Schubkurbelantrieb 25 ist vorzugsweise separat von den Tilgern 1 realisiert. Vorzugsweise ist der Schubkurbelantrieb 25 über eine nur schematisch in Fig. 1 dargestellt Federeinrichtung 26 mit mindestens einer Feder mit der Schwingmasse 7 verbunden bzw. gekoppelt.

Die Federeinrichtung 26 ist vorzugsweise weicher als die erste und/oder zweite Federanordnung 4, 5. Insbesondere beträgt die Federhärte der Federeinrichtung 26 höchstens die Hälfte der Federhärte der ersten und/oder zweiten Federanordnung 4, 5.

Der Tilger 1 und/oder die Schwingungsmaschine 8 kann eine oder mehrere Messeinrichtungen, insbesondere Sensoren, zum Messen von Schwingungsdaten, insbesondere Schwingungsrichtungen, Schwingungsamplituden und/oder Schwingungskräften, von Schwingungen S1, S2 der Tilgermasse 3 und/oder der Schwingmasse 7 und/oder zum Messen der dynamischen Fundamentlasten und/oder auf den Lagerpunkt 6 wirkenden Kräften aufweisen.

Die Messeinrichtungen sind vorzugsweise signaltechnisch mit der Steuerung/Regelung 15 verbunden, sodass die Steuerung/Regelung 15 Messdaten von den Messeinrichtungen empfangen kann und insbesondere auf dieser Basis die Federhärte der Feder(n) 12 mit veränderbarer Federhärte einstellen, steuern und/oder regeln kann.

Alternativ oder zusätzlich zur Steuerung auf Basis von Messdaten der Messeinrichtungen ist es möglich, dass die Steuerung anhand einer vorgegebenen Funktion oder Tabelle erfolgt. In der Funktion oder Tabelle kann beispielsweise verschiedenen Werten eines oder mehrerer Betriebsparameter des Tilgers 1 und/oder der Schwingungsmaschine 8 jeweils eine bestimmte (einzustellende) Federhärte der Feder(n) 12 zugeordnet sein. Betriebsparameter können beispielsweise eine Drehzahl, Frequenz und/oder Amplitude des Schubkurbelantriebs 25 der Schwingungsmaschine 8 sein.

Insbesondere kann vorgesehen sein, dass an einem Testaufbau mit einem Tilger 1 und/oder einer Schwingungsmaschine 8 Versuche und/oder Testmessungen durchgeführt werden, in denen die Funktion oder Tabelle ermittelt bzw. erstellt wird und die so ermittelte Funktion oder Tabelle dann zur Steuerung von Tilgern 1 und/oder Schwingungsmaschinen 8 im Betrieb verwendet wird, vorzugsweise wobei die Tilger 1 und/oder Schwingungsmaschinen 8 baugleich zu dem/der beim Testaufbau verwendeten Tilger 1 und/oder Schwingungsmaschine 8 ist/sind.

Analog kann auch vorgesehen sein, mit einem entsprechenden Testaufbau eine Funktion oder Tabelle zu erstellen, die verschiedenen Werten von Messdaten der Messeinrichtungen zu erstellen bzw. zu ermitteln und die so ermittelte Funktion oder Tabelle dann zur Steuerung von Tilgern 1 und/oder Schwingungsmaschinen 8 im Betrieb verwendet wird, vorzugsweise wobei die Tilger 1 und/oder Schwingungsmaschinen 8 baugleich zu dem/der beim Testaufbau verwendeten Tilger 1 und/oder Schwingungsmaschine 8 ist/sind.

Einzelne Aspekte und Merkmale der vorliegenden Erfindung können unabhängig voneinander, aber auch in beliebiger Kombination realisiert werden.

**Bezugszeichenliste:**

| | |
|---|---|
| 1 | Tilger |
| 2 | Kompensationssystem |
| 3 | Tilgermasse |
| 4 | erste Federanordnung |
| 5 | zweite Federanordnung |
| 6 | Lagerpunkt |
| 6A | Streben |
| 7 | Schwingmasse |
| 8 | Schwingungsmaschine |
| 9 | Fundament |
| 10 | Umlenkeinrichtung |
| 11 | Umlenkhebel |
| 11A | Hebelarm |
| 11B | Hebelarm |
| 12 | Feder mit veränderbarer Federhärte |
| 13 | Federpaar |
| 14 | Feder mit unveränderbarer Federhärte |
| 15 | Steuerung/Regelung |
| 16 | Fundamentanschluss |
| 16A | Blech von 16 |
| 17 | Rahmen |
| 18 | Leitungen |
| 19 | Drehachse |
| 20 | Federeinrichtung |
| 21 | Schwingmassenanschluss |
| 21A | Blech von 21 |
| 21B | Verbindungsstück von 21 |
| 22 | Fördertrog |
| 23 | Stabilisierungseinrichtung |
| 24 | Blattfedern |
| 25 | Schubkurbelantrieb |
| 26 | Federeinrichtung |
| | |
| F1 | Kraft von 7 |
| F2 | Kraft von 3 |
| S1 | Schwingungen von 7 |
| S2 | Schwingungen von 3 |

**Patentansprüche**

1. Tilger (1) für eine Schwingungsmaschine (8), insbesondere für einen Schwingförderer zum Fördern von Schüttgut und/oder für eine Siebmaschine zum Sieben von Schüttgut,

   mit einem Kompensationssystem (2) zur Kompensation von durch eine Schwingmasse (7) erzeugten Schwingungskräften,
   **dadurch gekennzeichnet,**
   **dass** das Kompensationssystem (2) mindestens eine Feder (12) mit veränderbarer Federhärte aufweist.

2. Tilger nach Anspruch 1, **dadurch gekennzeichnet, dass** die Feder (12) mit veränderbarer Federhärte eine pneumatische und/oder hydraulische Feder, vorzugsweise eine Luftfeder bzw. ein Balgzylinder, ist, insbesondere wobei die Federhärte über einen Gas- und/oder Fluiddruck innerhalb der Feder (12) veränderbar ist.

3. Tilger nach Anspruch 1 oder 2, **dadurch gekennzeichnet, dass** das Kompensationssystem (2) zwei vorzugsweise baugleiche Federn (12) mit veränderbarer Federhärte aufweist, die auf gegenüberliegenden Seiten eines Lagerpunkts (6) des Tilgers (1) und/oder symmetrisch zu dem Lagerpunkt (6) angeordnet und/oder mit dem Lagerpunkt (6) gekoppelt sind und/oder die gemeinsam als Zug-Druck-Feder wirken.

4. Tilger nach einem der voranstehenden Ansprüche, **dadurch gekennzeichnet, dass** das Kompensationssystem (2) ein Federpaar (13) aus zwei vorzugsweise baugleichen Federn (12) mit veränderbarer Federhärte aufweist, wobei die Federn (12) des Federpaars (13) derart angeordnet sind, dass bei positiver Auslenkung einer Tilgermasse (3) aus einer Ruhelage eine der Federn (12) des Federpaars (13) komprimiert wird und bei negativer Auslenkung der Tilgermasse (3) aus der Ruhelage die andere Feder (12) des Federpaars (13) komprimiert wird.

5. Tilger nach einem der voranstehenden Ansprüche, **dadurch gekennzeichnet, dass** das Kompensationssystem (2) mindestens eine Feder (14), vorzugsweise mehrere Federn (14), mit unveränderbarer Federhärte aufweist.

6. Tilger nach Anspruch 5, **dadurch gekennzeichnet, dass** die Feder (12) mit veränderbarer Federhärte parallel zu der Feder (14) mit unveränderbarer Federhärte geschaltet bzw. angeordnet ist.

7. Tilger nach Anspruch 5 oder 6, **dadurch gekennzeichnet, dass** die Feder (14) mit unveränderbarer Federhärte als Schraubenfeder und/oder Zug-Druck-Feder ausgebildet.

8. Tilger nach einem der voranstehenden Ansprüche, **dadurch gekennzeichnet, dass** das Kompensationssystem (2) ein erste Federanordnung (4) und eine zweite Federanordnung (5) aufweist, wobei die erste Federanordnung (4) einen Lagerpunkt (6) des Tilgers (1) mit der Schwingmasse (7) koppelt und die zweite Federanordnung (5) den Lagerpunkt (6) mit einer Tilgermasse (3) koppelt, wobei mindestens eine der Federanordnungen (4, 5) mindestens eine Feder (12) mit veränderbarer Federhärte und mindestens eine parallel dazu geschaltete bzw. angeordnete Feder (14) mit unveränderbarer Federhärte aufweist/aufweisen.

9. Tilger nach Anspruch 8, **dadurch gekennzeichnet, dass** ausschließlich die zweite Federanordnung (5) die Feder/-n (12) mit veränderbarer Federhärte aufweist.

10. Tilger nach einem der voranstehenden Ansprüche, **dadurch gekennzeichnet, dass** der Tilger (1) eine Umlenkeinrichtung (10) mit einem Umlenkhebel (11) aufweist, über den die Schwingmasse (7) mit einer Tilgermasse (3) gekoppelt bzw. koppelbar ist, sodass die Tilgermasse (3) und die Schwingmasse (7) gegenphasige Schwingungen (S1, S2) ausführen, vorzugsweise wobei der Umlenkhebel (11) zwei Hebelarme (11A, 11B) mit einem Hebelarmverhältnis aufweist, das in etwa dem Massenverhältnis von Schwingmasse (7) zu Tilgermasse (3) entspricht.

11. Tilger nach Anspruch 10, **dadurch gekennzeichnet, dass** der Umlenkhebel (11) über eine Federeinrichtung (20) mit der Tilgermasse (3) gekoppelt ist.

12. Tilger nach einem der voranstehenden Ansprüche, **dadurch gekennzeichnet, dass** der Tilger (1) und/oder das Kompensationssystem (2) zur mechanischen und/oder passiven Schwingungskompensation ausgebildet ist/sind.

13. Tilger nach einem der voranstehenden Ansprüche, **dadurch gekennzeichnet, dass** der Tilger (1) eine elektronische Steuerung bzw. Regelung (15) zur insbesondere automatischen und/oder adaptiven Einstellung der Federhärte der Feder (12) mit veränderbarer Federhärte aufweist.

14. Tilger nach einem der voranstehenden Ansprüche, **dadurch gekennzeichnet, dass** der Tilger (1) dazu ausgebildet ist, die Schwingungskräfte zumindest zu einem Großteil zu kompensieren, insbesondere sodass in ein Fundament (9) eingebrachte dynamische Fundamentlasten reduziert oder kompensiert werden.

15. Schwingungsmaschine (8), insbesondere Schwingförderer zum Fördern von Schüttgut und/oder Siebmaschine zum Sieben von Schüttgut, mit einem oder mehreren Tilgern (1) nach einem der voranstehenden Ansprüche.

Fig. 1

Fig. 2

EP 4 656 901 A1

Fig. 3

Fig. 4

EP 4 656 901 A1

Fig. 5

EUROPÄISCHER RECHERCHENBERICHT

Nummer der Anmeldung

EP 25 17 8759

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CA 1 017 971 A (REXNORD INC) 27. September 1977 (1977-09-27) | 1-7, 12-15 | INV. F16F7/10 |
| A | * Abbildung 1 * ----- | 8-11 | |
| X | DE 12 51 695 B (REX CHAINBELT INC) 5. Oktober 1967 (1967-10-05) * Abbildung 1 * ----- | 1 | |
| A | US 5 713 457 A (MUSSCHOOT ALBERT [US]) 3. Februar 1998 (1998-02-03) * Abbildungen 2,3 * ----- | 1 | |

RECHERCHIERTE SACHGEBIETE (IPC)

F16F

Der vorliegende Recherchenbericht wurde für alle Patentansprüche erstellt

| Recherchenort | Abschlußdatum der Recherche | Prüfer |
|---|---|---|
| Den Haag | 8. Oktober 2025 | Beaumont, Arnaud |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................
& : Mitglied der gleichen Patentfamilie, übereinstimmendes Dokument

EPO FORM 1503 03.82 (P04C03)

# EP 4 656 901 A1

## ANHANG ZUM EUROPÄISCHEN RECHERCHENBERICHT
## ÜBER DIE EUROPÄISCHE PATENTANMELDUNG NR.

EP 25 17 8759

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-10-2025

| Im Recherchenbericht angeführtes Patentdokument | | Datum der Veröffentlichung | Mitglied(er) der Patentfamilie | | Datum der Veröffentlichung |
|---|---|---|---|---|---|
| CA 1017971 | A | 27-09-1977 | AU | 6981374 A | 11-12-1975 |
| | | | BE | 817175 A | 04-11-1974 |
| | | | CA | 1017971 A | 27-09-1977 |
| | | | DE | 2427907 A1 | 23-01-1975 |
| | | | GB | 1465327 A | 23-02-1977 |
| | | | JP | S5037173 A | 07-04-1975 |
| | | | JP | S5760243 B2 | 18-12-1982 |
| | | | ZA | 743775 B | 25-06-1975 |
| DE 1251695 | B | 05-10-1967 | KEINE | | |
| US 5713457 | A | 03-02-1998 | DE | 19650771 A1 | 12-06-1997 |
| | | | GB | 2307892 A | 11-06-1997 |
| | | | IT | 1289223 B1 | 29-09-1998 |
| | | | JP | 3842355 B2 | 08-11-2006 |
| | | | JP | H09175622 A | 08-07-1997 |
| | | | US | 5713457 A | 03-02-1998 |

Für nähere Einzelheiten zu diesem Anhang : siehe Amtsblatt des Europäischen Patentamts, Nr.12/82

EPO FORM P0461